# EUROPEAN PATENT APPLICATION

(11) **EP 0 873 848 A1**
(43) Date of publication of application: **28.10.1998**
(21) Application number: 98830092.7
(22) Date of filing: 24.02.1998
(51) Int. Cl.: B29C 59/00, B65B 61/18, B65D 75/66

(54) **A method and a device for the realization of easy tear lines in a wrapping material**

(30) Priority: 28.03.1997 IT BO970187
(71) Applicant: G.D S.p.A., 40133 Bologna (IT)
(72) Inventor: Belvederi, Bruno, 40050 San Martino di Monte San Pietro (IT)
(74) Representative: Pederzini, Paolo

(57) **Abstract**

A device (1) for the incorporation of easy tear lines (2) into a wrapping material (3), as used in fashioning outer wrappers (4) around packets of cigarettes (5), is designed to implement a method involving the application of a slender fillet (8) of a suitable fluid substance (9) to at least one face (6) and along at least one given straight line generator (7) of the wrapping material (3); the fluid substance (9) adheres to the face (6) of the wrapping material (3) and hardens to a film (10) of strength sufficient to materialize the easy tear lines (2), so that the wrapper (4) will lacerate readily when the film (10) is seized and pulled.

## Description

The present invention relates to a method for the realization of easy tear lines on a wrapping material.

More especially, the present invention relates to a method of fashioning easy tear lines on a wrapping material destined for use in particular as an outer protective covering for packets of cigarettes, to which reference is made explicitly throughout the following specification albeit with no limitation in scope implied.

Conventionally, the outer wrapper on a packet of cigarettes affords a ribbon of minimal transverse dimensions, known generally as a tear strip, such as will allow the outer wrapper (also referred to widely as an overwrap) to be broken open easily and immediately when the time comes for the contents of the packet to be consumed.

Likewise conventionally, within the art field of machines used for wrapping cigarette packets, the tear strip, which could be self-adhesive, is either decoiled continuously from a roll or obtained by making transverse cuts in a film of predetermined width in such a way as to generate a succession of discrete ribbons substantially equal in length to the required length of the tear strip. As regards the application of the tear strip to the wrapping material, the ribbon generally will be affixed, if self-adhesive, or heat sealed to the overwrap.

Both of the aforementioned operations employed for applying the ribbon to the wrapping material are affected by complications attributable to the fact that the machine must be equipped with devices for aligning the ribbon with the wrapping material and, in the case of a ribbon decoiled from a roll, the design of the decoiling systems adopted must also ensure a constant tension of the ribbon relative to the wrapping material so as to avoid any rippling of the ribbon and the wrapping material when joined together.

In either case, the ultimate effect of including such devices and systems is to render the machine inordinately cumbersome, with the result that its structural balance and consequently its functional efficiency are heavily compromised.

In addition, and with regard in particular to the heat seal operation, there is the familiar drawback connected with high thermal inertias; in practice, heat seal devices must be raised to high operating temperatures in order to ensure a faultless seal, even at the high operating speeds of the wrapping machines currently in use, and the time allowed for contact between the ribbon, the wrapping material and the heat seal plates is relatively short. Heat seal devices able to operate in such conditions are complex and sophisticated in construction, and are also difficult to regulate thermally with the end in view of avoiding the critical temperature that would fuse the ribbon and the wrapping material in the event that the rate of feed through the heat seal station should differ from the optimum rate, prolonging the duration of the contact between the ribbon and the wrapping material and the heat seal plates.

The object of the present invention is to provide a method such as will allow of eliminating the above complications and remain free of the attendant drawbacks.

The stated object is achieved in a method according to the invention for the realization of easy tear lines on a wrapping material intended in particular for fashioning protective wrappers around products, characterized in that it comprises the step of applying a fluid substance as a fillet of selected thickness and transverse dimensions to at least one face and along at least one selected straight line generator of the wrapping material, and in that the fluid substance possesses the capacity of adhering to the face of the wrapping material and thereupon of converting physically to a film of strength such as will materialize the easy tear lines and thus allow of lacerating the wrapping material when the film is seized and pulled.

The present invention also relates to a device for the realization of easy tear lines on a wrapping material.

According to the present invention, a device for the realization of easy tear lines on a wrapping material intended in particular for fashioning protective wrappers around corresponding products is characterized in that it comprises dispensing means disposed and embodied in such a way as to apply a fluid substance as a fillet of selected thickness and transverse dimensions to at least one face and along at least one selected straight line generator of the wrapping material, and in that the fluid substance possesses the capacity of adhering to the face of the wrapping material and thereupon of converting physically to a film of strength such as will materialize the easy tear lines and thus allow of lacerating the wrapping material when the film is seized and pulled.

The invention will now be described in detail, by way of example, with the aid of the accompanying drawings, in which:
- fig 1 illustrates a length of wrapping material, schematically and in perspective, provided with a film defining an easy tear line according to the present invention;
- fig 2 illustrates a packet of cigarettes, viewed schematically and in perspective, protected by an outer wrapper fashioned from a wrapping material provided with a film defining an easy tear line according to the present invention;
- fig 3 illustrates a portion of a wrapping machine, schematically and in a side elevation, equipped with a first possible embodiment of a device for the realization of easy tear lines on a wrapping material by the method according to the present invention;
- fig 4 illustrates a second embodiment of a device, viewed schematically and in a side elevation, for the realization of easy tear lines on a wrapping material by the method according to the present invention.

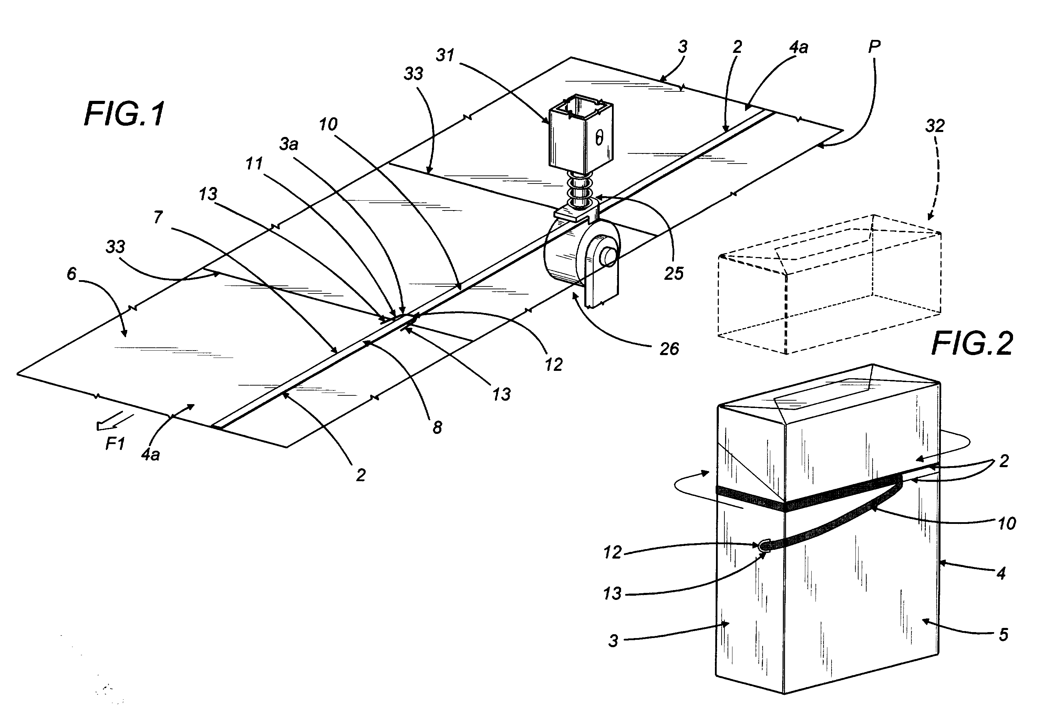

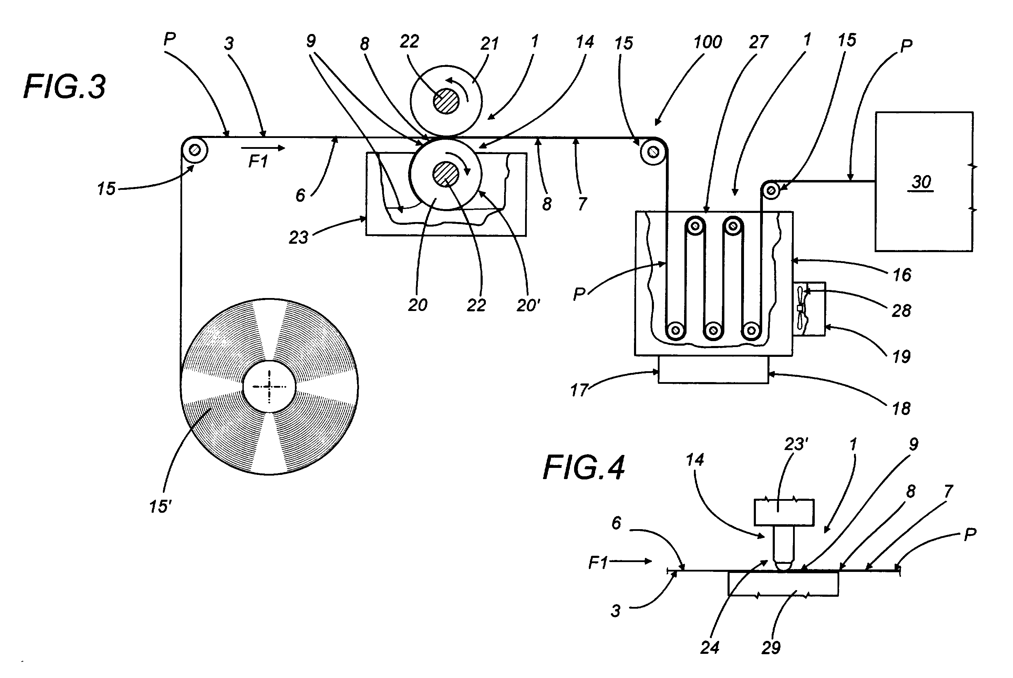

With reference to figs 1, 2 and 3 of the drawings, 100 denotes a portion of a wrapping machine (fig 3) whilst 1 denotes a device, in its entirety, for the realization of easy tear lines 2 on a wrapping material 3 utilized to form protective wrappers 4 around products 5 consisting, by way of example, in packets of cigarettes.

The device 1 comprises feed means 15 embodied as a plurality of pulley or roller elements, of which the function is to advance the wrapping material 3, decoiling from a roll 15', along a predetermined path P and in a given feed direction F1.

The device 1 also comprises dispensing means 14 located along the feed path P, by which a fillet 8 of a fluid substance 9 is deposited on at least one face 6 and along at least one selected straight line generator 7 of the wrapping material 3, the thickness and the width of such a fillet 8 being previously determined and fixed in relation to the thickness and the width of the wrapping material 3 to which the fluid substance 9 is applied.

The chemical and physical properties of the fluid substance 9 are such as will cause it to adhere to the face 6 of the wrapping material 3 and then to convert physically, on the face 6, into a film 10 of which the mechanical strength is sufficient to materialize the aforementioned easy tear lines 2 on the wrapping material 3, which will lacerate when the film 10 itself is seized and pulled.

As discernible in fig 1 and fig 2, the wrapping material 3 is procured as a continuous strip in which successive transverse cuts are made along lines denoted 33 to produce single sheets 4a, each fashioned ultimately into a protective wrapper 4 or overwrap around a respective product 5, which in the example of fig 2 consists in a packet 5 of cigarettes, whilst the film 10 functions to all intents and purposes as a tear strip 10 stably associated with the wrapper 4.

Observing fig 3, the device 1 will be seen also to comprise means 16, 17, 18 of accelerating the step by which the fluid substance 9 is converted into a film 10. In effect, the fluid substance 9 can be applied either hot or cold to the face 6 of the wrapping material 3 by the dispensing means 14.

More exactly, such accelerating means consist in an enclosure 27 through which the wrapping material 3 will be caused to pass immediately after the fluid substance 9 has been dispensed onto the relative face 6; the enclosure 27 also functions as a flow accumulator in elongating the path P followed by the wrapping material 3 before its arrival at an overwrapping station, indicated schematically by a block denoted 30 in fig 3, at which the wrapping material 3 is divided up into single sheets 4a as mentioned previously.

In the event of the fluid substance 9 being applied hot to the wrapping material 3, the process of its conversion to a film 10 will be accelerated by cooling means of conventional embodiment indicated schematically by a block denoted 17, operating in association with the enclosure 27. In the case of a fluid substance 9 applied cold, the process of its conversion to a film 10 will be accelerated by heating means likewise of conventional embodiment, in this instance indicated schematically by a block denoted 18.

On this subject, it should be emphasized that the fluid substance 9 might be provided by any one of a variety of materials, for example: water or solvent based paints and varnishes, a plastics material in the fluid state, or other categories of polymers and resins. In each instance, as appropriate, the step of accelerating the physical process by which the fluid substance 9 is converted to a film 10 can consist in drying, aggregation or polymerization. The accelerating means might consist in a fan 19, of which the rotor 28 is positioned to blow hot or cold air onto the wrapping material 3 advancing through the enclosure 27, the fluid substance 9 having already been applied, in order to volatilize or evaporate the solvents in the substance 9 and thus allow its conversion to a film 10.

Observing the device 1 as illustrated in fig 3, the dispensing means 14 appear as a pair of rollers 20 and 21 operating in combination one with another, supported by and rotatable about relative shafts 22 and disposed respectively on either side of the predetermined feed path P followed by the wrapping material 3 as it advances in the feed direction F1.

The rollers 20 and 21 remain permanently in contact with the wrapping material 3, the one roller 20 rotating internally of a reservoir 23 containing the fluid substance 9 and positioned such that its surface of revolution 20' will pick up a fillet 8 of the fluid substance 9 and transfer it to the aforementioned face 6 of the wrapping material 3, with the other roller 21 affording a reaction surface.

In the example of fig 4 the dispensing means 14 are illustrated as a nozzle, denoted 24, which might also be associated with a reservoir 23' containing the fluid substance 9.

In either case, the dispensing means 14 could be of a disposable type, easily and swiftly replaced once consumed.

Observing fig 1, the device 1 will be seen also to comprise incision means 25 and 26 of conventional embodiment, disposed and embodied in such a manner as to pierce the wrapping material 3 with at least one notch 11 located on a predetermined portion 3a coinciding with the generator 7 along which the fluid substance 9 is applied. The geometry of the notch 11 cut in the wrapping material 3 will be such as to fashion a tab 12 in the dried film 10, interconnecting two incisions 13 from which to initiate the laceration of the wrapping material 3 along the easy tear lines 2.

Once the single sheet 4a of wrapping material 3 has been cut and formed into a wrapper 4 around the relative packet 5 of cigarettes, as shown in fig 2, the consumer need only seize and pull on the tab 12 in order to peel back the film 10. In this way, the film 10 will lacerate the wrapper 4 along the easy tear lines 2 started by the two incisions 13 and separate it into two parts of which at least one, illustrated by phantom lines in fig 2 and definable as the cap 32 of the wrapper 4, can be slipped off the packet 5 and allow it to be opened, affording access to the cigarettes contained inside.

## Claims

1. A method for the realization of easy tear lines on a wrapping material intended in particular for fashioning protective wrappers (4) around relative products (5),
characterized
in that it comprises the step of applying a fluid substance (9) as a fillet (8) of selected thickness and transverse dimensions to at least one face (6) and along at least one selected straight line generator (7) of the wrapping material (3); and,
in that the fluid substance (9) possesses the capacity of adhering to the face (6) of the wrapping material (3) and thereupon of converting physically to a film (10) of strength such as will materialize the easy tear lines (2) and thus allow of lacerating the wrapping material (3) when the film (10) is seized and pulled.

2. A method for the realization of easy tear lines on a wrapping material intended in particular for fashioning protective wrappers (4) around relative products (5), in wrapping machines by which the products (5) are enveloped each in a relative wrapper (4),
characterized
in that it comprises the steps of advancing the wrapping material (3) along a predetermined feed path (P), and applying a fluid substance (9) as a fillet (8) of selected thickness and transverse dimensions to at least one face (6) and along at least one selected straight line generator (7) of the wrapping material (3); and,
in that the fluid substance (9) possesses the capacity of adhering to the face (6) of the wrapping material (3) and thereupon of converting physically to a film (10) of strength such as will materialize the easy tear lines (2) and thus allow of lacerating the wrapping material (3) when the film (10) is seized and pulled.

3. A method as in claim 1 or 2, comprising a further step of accelerating the process whereby the fluid substance (9) is converted to a film (10).

4. A method as in claim 1 or 2, wherein the step of applying a fluid substance consists in dispensing the fluid substance (9) hot, and the step of accelerating the physical conversion consists in cooling the fluid substance (9).

5. A method as in claim 1 or 2, wherein the step of applying a fluid substance consists in dispensing the fluid substance (9) cold, and the step of accelerating the physical conversion consists in heating the fluid substance (9).

6. A method as in claims 1 to 5, comprising a step of accelerating the physical conversion of the fluid substance (9) applied to the wrapping material (3) by forced ventilation.

7. A method as in claims 1 to 6, comprising the further step of piercing the wrapping material (3) in such a way as to produce at least one notch (11) located on a portion (3a) coinciding with the generator (7) along which the fluid substance (9) is applied, resulting in the creation of a tab (12) in the film (10), and of two incisions (13) from which to initiate a laceration of the wrapping material (3) along the easy tear lines (2).

8. A device for the realization of easy tear lines on a wrapping material intended in particular for fashioning protective wrappers (4) around relative products (5),
characterized
in that it comprises dispensing means (14) disposed and embodied in such a way as to apply a fluid substance (9) as a fillet (8) of selected thickness and transverse dimensions to at least one face (6) and along at least one selected straight line generator (7) of the wrapping material (3); and
in that the fluid substance (9) possesses the capacity of adhering to the face (6) of the wrapping material (3) and thereupon of converting physically to a film (10) of strength such as will materialize the easy tear lines (2) and thus allow of lacerating the wrapping material (3) when the film (10) is seized and pulled.

9. A device as in claim 8, associated in particular with wrapping machines by which the products (5) are enveloped each in a relative wrapper (4), comprising feed means (15) by which the wrapping material (3) is advanced along a predetermined feed path (P), and dispensing means (14) located along the predetermined feed path (P) followed by the wrapping material (3), of which the function is to apply a fluid substance (9) as a fillet (8) of selected thickness and transverse dimensions to at least one face (6) and along at least one selected straight line generator (7) of the wrapping material (3), wherein the fluid substance (9) possesses the capacity of adhering to the face (6) of the wrapping material (3) and thereupon of converting physically to a film (10) of strength such as will materialize the easy tear lines (2) and thus allow of lacerating the wrapping material (3) when the film (10) is seized and pulled.

10. A device as in claim 8, comprising means (16, 17, 18) of accelerating the process by which the fluid substance (9) is converted to a film (10).

11. A device as in claim 8, wherein the fluid substance (9) is applied hot by the dispensing means (14), and accelerating means consist in means (16, 17) by which to cool the fluid substance (9).

12. A device as in claim 8, wherein the fluid substance (9) is applied cold by the dispensing means (14), and accelerating means consist in means (16, 18) by which to heat the fluid substance (9).

13. A device as in claims 8 to 12, comprising fan means (19) disposed and embodied in such a way as to accelerate the physical conversion of the fluid substance (9) applied to the wrapping material (3) by forced ventilation.

14. A device as in claim 9, wherein dispensing means (14) comprise a pair of rollers (20, 21) supported by and rotatable about corresponding shafts (22) disposed respectively on either side of the predetermined feed path (P) followed by the wrapping material (3), operating in combination one with another and in contact with the wrapping material, of which one roller (20, 21) rotates internally of a reservoir (23) containing the fluid substance (9) and partly in contact with the contents in such a way that its surface of revolution (20') will pick up a fillet (8) of the fluid substance and transfer it to the face (6) of the wrapping material (3).

15. A device as in claim 9, wherein dispensing means (14) consist in a nozzle (24) from which the fluid substance (9) is delivered.

16. A device as in claims 9 to 15, wherein the dispensing means (14) are disposable in embodiment.

17. A device as in claims 8 to 16, comprising incision means (25, 26) disposed and embodied in such a way as to pierce a predetermined portion (3a) of the wrapping material (3) coinciding with the straight line generator (7) along which the fluid substance (9) is applied prior to the wrapping material being fashioned into a protective wrapper (4) around a corresponding product (5), and thus to produce at least one notch (11) resulting in the creation of a tab (12) in the film (10) formed on the wrapping material (3) and of two incisions (13) from which to initiate the laceration of the wrapping material (3) along the easy tear lines (2).

18. A protective wrapper for consumer products, furnished with easy tear lines (2) obtained by the method of claims 1 to 7 and utilizing a device (1) as in claims 8 to 17.

19. A packet of cigarettes, furnished with a protective wrapper (4) as in claim 18.
